# FASCICULE DE BREVET EUROPEEN

(11) **EP 1 147 040 B1**
(45) Date de publication et mention de la délivrance du brevet: **03.03.2004**
(21) Numéro de dépôt: 99958255.4
(22) Date de dépôt: 07.12.1999
(51) Int. Cl.: B60T 7/06, G05G 1/14

(54) **DISPOSITIF DE MONTAGE POUR DES ORGANES DE COMMANDE A PEDALE**
VORRICHTUNG ZUR MONTAGE VON PEDALSTEUERUNGSELEMENTEN
DEVICE FOR MOUNTING PEDAL-OPERATED CONTROL ELEMENTS

(30) Priorité: 11.12.1998 FR 9815682
(43) Date de publication de la demande: 24.10.2001
(73) Titulaire: WABCO France, 77410 Claye Souilly (FR)
(72) Inventeur: SAMSON, Daniel, F-93470 Coubron (FR); PERHERIN, Daniel, F-77270 Villeparis (FR); L'HER, Didier, F-93140 Bondy (FR)
(74) Mandataire: Cabinet Hirsch
(86) Numéro de dépôt international: PCT/FR1999/003033
(87) Numéro de publication internationale: WO 2000/035727

(56) Documents cités:
- DE-A- 4 304 565
- US-A- 5 331 813

## Description

La présente invention s'applique à un dispositif de montage d'au moins un organe de commande à fluide sous pression actionnable par une pédale ou un levier pour un véhicule à moteur et à cabine de conduite, comprenant un organe de support en forme de plaque à deux faces, respectivement intérieure et extérieure par rapport à ladite cabine, plaque qui porte l'organe de commande et sa pédale (ou levier) d'actionnement et est susceptible d'être fixée par au moins une partie de sa périphérie sur le bord conjugué d'une ouverture ménagée à travers une paroi de ladite cabine.

La présente invention concerne également des maîtres-cylindres intégrés à un tel dispositif de montage, et bien sûr les véhicules comprenant de tels dispositifs de montage.

Les organes de commande à pédale pour les véhicules automobiles comportent généralement, disposées de droite à gauche, une commande d'accélérateur et une commande de frein actionnées généralement de façon non simultanée (sauf pour la commande spéciale talon-pointe autrefois utilisée pour rétrograder les rapports de transmission sur les voitures de compétition) par le pied droit du conducteur, et enfin une commande de débrayage (sauf pour les véhicules à transmission automatique) actionnée par le pied gauche du conducteur. Sur les voitures de tourisme, l'encombrement des organes de commande est principalement conditionné par l'encombrement de la pédale elle-même dont le positionnement est étudié avec soin, aboutissant le plus souvent à des pédales suspendues. Sur les véhicules utilitaires, les organes de commande à pédale pour le freinage et le débrayage comportent généralement des valves à fluide sous pression, à air comprimé en général, dont l'encombrement diamétral non seulement est important mais en plus tend à croître au cours de l'évolution des techniques de freinage et de débrayage.

En conséquence de cette situation, les constructeurs de véhicules industriels réalisent le montage des organes de commande préalablement fixés sur un organe de support en forme de plaque à deux faces, ce qui facilite le raccordement des conduites d'entrée et de sortie de fluide ainsi que des conducteurs électriques et/ou électroniques de plus en plus nombreux et reliant des capteurs à des circuits de traitement de signaux. Dans le cadre général de la réduction du coût de montage des véhicules et de la réduction des erreurs de montage, relativement nombreuses pour les véhicules industriels où les séries sont réduites, le problème s'est posé d'une réalisation plus stable et plus économique du montage des organes de commande dans la cabine de conduite, en particulier pour les véhicules industriels comportant des valves à fluide de dimensions diamétrales importantes.

On connaît déjà de EP-A- 550742 (US-A- 5331813) un ensemble d'actionnement des freins, de l'accélérateur et de l'embrayage d'un véhicule, dans lequel ces trois éléments de commande sont montés sur une plaque de montage commune en tôle emboutie. Un tel ensemble groupé est monté en bloc dans le véhicule en appliquant la plaque de montage sur le bord d'une ouverture ménagé dans une paroi du véhicule et en fixant la plaque par des vis sur ce bord.

Ces dispositifs de montage pour des organes de commande à pédale se sont révélés inadaptés au montage sur les véhicules industriels, en particulier les véhicules routiers lourds. Les organes de commande de frein et d'embrayage de ces véhicules sont réalisés dans des corps moulés dans des matériaux résistants et qui présentent une relativement grande rigidité et il s'est révélé presque impossible de prémonter de façon fiable, compacte et économique ces organes ou valves de commande sur des plaques en tôle. En outre, les diamètres des parties de piston mobiles des valves et émetteurs de pression de fluide de ces véhicules lourds déjà relativement importants, ont tendance à augmenter pour augmenter les puissances et les sensibilités. Ces parties de piston nécessitent un bon guidage et une bonne rigidité du corps de valve et de son support sous peine de risquer des blocages de valves intempestifs et des défauts de sensibilité ressentis notamment par les conducteurs au cours de l'actionnement de freins dans des situations de détresse (sur route mouillée par exemple) et également pour le contrôle du réembrayage (pour le démarrage en côte et les manoeuvres par exemple).

L'utilisation de plaques de montage épaisses ne permet pas de résoudre économiquement le problème de la rigidité du montage et conduit à un alourdissement du système de commande qui, à la construction du véhicule, gêne le montage dans des ouvertures de passage toujours plus grandes et gêne également l'accessibilité de surveillance, d'entretien et de réparation.

La présente invention vise en conséquence à réaliser un dispositif de montage des organes de commande d'un véhicule actionnés par une pédale ou un levier qui tout en étant moins encombrant, moins complexe et donc plus fiable, présente des améliorations décisives sur le plan de la rigidité propre et de montage des organes de commande et de la facilité de montage de ces organes, et qui permette de réduire le coût d'installation de la fonction des organes de commande dans une cabine de conduite de véhicule, en particulier dans une cabine de véhicule industriel.

A cet effet, selon l'invention, on propose un dispositif de montage d'au moins un organe de commande à fluide sous pression actionné par levier ou pédale, pour véhicule à moteur, comprenant un support en forme générale de plaque présentant deux faces principales, sur lequel ledit organe de commande à fluide sous pression présentant au moins un corps principal réalisé par moulage, est agencé de sorte à traverser la plaque-support d'une face principale à l'autre face principale, ledit levier ou pédale associé étant monté du côté d'une première face principale du support, le dispositif étant caractérisé en ce que la plaque-support est formée rigide et monobloc par moulage et en ce que le corps principal ou d'assemblage de l'organe de commande à fluide sous pression est réalisé monobloc avec la plaque-support.

On obtient ainsi un effet de synergie entre la plaque-support et le corps principal de l'organe de commande à fluide sous pression. La réalisation d'une plaque-support par moulage qui serait trop onéreuse et trop complexe pour obtenir une plaque-support qui soit à la fois relativement légère et rigide devient possible lorsque la plaque-support constitue en même temps le corps principal de l'organe de commande à fluide. Des avantages techniques supplémentaires sont obtenus du fait de l'augmentation de la rigidité du corps principal de l'organe de commande et des facilités supplémentaires de raccordement des canalisations de fluide et électriques-électroniques sur la face intérieure (côté habitacle) ou la face extérieure de la plaque-support. L'ensemble moulé (directement ou, dans le cas de l'utilisation éventuelle de matière plastique, en réalisant une soudure autogène aux ultrasons entre au moins deux éléments moulés séparément) monobloc constitué d'au moins la plaque-support et le corps principal de l'organe de commande peut aisément d'une part être réalisé en un matériau léger et résistant tel qu'un alliage d'aluminium et d'autre part être muni de surfaces et d'éléments (nervures) de raidissement et d'éléments annexes (boîtiers, paliers, guides) tandis que tous les éléments de liaison (vis, boulons) qui participent beaucoup à l'alourdissement et peu à la rigidification sont éliminés. Dans tous le cas, l'inclusion du corps de valve ou d'organes de commande (maître-cylindre) dans la plaque-support constitue de façon intrinsèque un élément décisif de rigidification de cette plaque-support et n'entraîne pas de majoration des coûts pour la réalisation de l'ensemble, comme le ferait l'utilisation d'une plaque-support séparée en tôle ou provenant de moulage ou d'un autre moyen de formage.

Selon un autre mode de réalisation, au moins l'une des parois de confinement de fluide dudit organe à fluide sous pression est réalisée monobloc avec la plaque-support.

Selon un autre mode de réalisation, ledit organe de commande à fluide sous pression est un robinet de frein double dont les raccords de fluide sont disposés sensiblement parallèles à l'axe de symétrie du robinet de frein double.

Selon un autre mode de réalisation, ledit organe de commande à fluide sous pression est un robinet de frein tandem dont un premier corps est réalisé monobloc avec la plaque-support et présente une face de réception d'un deuxième corps rapporté.

Selon un autre mode de réalisation, dans lequel ledit organe de commande à fluide sous pression est un maître-cylindre à fluide hydraulique, au moins une partie du corps et/ou du récipient de réserve de fluide hydraulique est réalisée monobloc avec la plaque-support.

Selon un autre mode de réalisation, ledit récipient de réserve est fermé par un soufflet élastique relié, à une extrémité, à un rebord annulaire du récipient de réserve et, à l'autre extrémité, à un poussoir ou plongeur mobile du maître-cylindre traversant ledit récipient de réserve.

Selon un autre mode de réalisation, le piston du maître-cylindre comporte un poussoir qui traverse ledit récipient de réserve et porte une garniture d'étanchéité annulaire à lèvre qui coopère avec l'alésage du corps de maître-cylindre débouchant sur la paroi intérieure du récipient de fluide hydraulique de réserve, et au moins un rainure de réalimentation est prévue dans la paroi dudit alésage depuis le débouché dans ladite paroi du récipient et s'étend axialement dans ladite paroi de l'alésage jusqu'au delà de la position de recul inactive de la lèvre de la garniture annulaire d'étanchéité, de manière à permettre la réalimentation directe de l'alésage du maître-cylindre par le liquide hydraulique du récipient de réserve via ladite rainure lorsque le piston du maître-cylindre est en position de recul.

Selon un autre mode de réalisation, le piston du maître-cylindre est constitué par un poussoir qui porte à une extrémité une garniture d'étanchéité suivie d'une surface d'appui rotulante, toujours engagée dans l'entrée de l'alésage, même en position de recul maximale dudit piston, et ledit poussoir est relié à l'autre extrémité de façon pivotante à un organe d'actionnement imposant audit poussoir en déplacement axial un pivotement sur un petit angle au cours dudit déplacement axial.

Selon un autre mode de réalisation, le corps du maître-cylindre et une partie du récipient de réserve sont fixés sur la plaque-support dans la zone où est constitué le reste du récipient de réserve, avec interposition d'un joint d'étanchéité.

Selon un autre mode de réalisation, la plaque-support présente en outre au moins un organe de commande électrique et/ou électronique et une pédale associée.

Selon un autre mode de réalisation, ledit organe de commande électrique ou électronique est monté dans un boîtier solidaire d'une face latérale de la plaque-support, du côté de la première face principale de la plaque-support tournée en service vers l'habitacle du véhicule.

Selon un autre mode de réalisation, l'organe de commande électrique et/ou électronique commande l'accélérateur du moteur du véhicule.

Selon un autre mode de réalisation, la plaque-support présente, du côté de la première face principale tournée vers l'habitacle, un boîtier de connexions dans lequel sont établies des liaisons électriques entre au moins un capteur coopérant avec l'un desdits organes de commande et au moins un connecteur traversant la plaque-support, ledit boîtier de connexions pouvant être réalisé monobloc avec le support.

Selon un autre mode de réalisation, ledit connecteur débouche, du côté de la deuxième face principale de la plaque-support, par une borne de branchement et est susceptible de traverser la plaque-support de façon sensiblement étanche.

Selon un autre mode de réalisation, ledit boîtier de connexion est fermé, du côté de la première face principale de la plaque-support, par un couvercle amovible.

Selon un autre mode de réalisation, la plaque-support présente des passages passe-cloison permettant le passage de liaisons de fluides et/ou de liaisons électriques d'une face principale à l'autre face principale de la plaque-support.

Selon un autre mode de réalisation, ledit levier ou pédale associé est monté pivotant sur un axe porté par un palier formé monobloc avec la plaque-support.

Selon un autre mode de réalisation, ledit levier ou pédale associé présente une fourche dont les extrémités en crochets s'engagent dans des ouvertures en crochets conjuguées réalisées dans un palier formé monobloc avec le support et est aisément amovible.

Selon un autre mode de réalisation, la plaque-support présente, du côté de la deuxième face principale, une cavité dans laquelle est logé au moins partiellement l'organe de commande à fluide sous pression et au moins une face de ladite cavité est munie de nervures de renforcement et/ou de raidissement.

Selon un autre mode de réalisation, la plaque-support présente au moins une face apte à être disposée jointive avec une face conjuguée de la plaque-support d'un autre dispositif de montage.

Selon un autre mode de réalisation, la plaque-support présente la forme générale d'un rectangle comportant sur trois de ses côtés un rebord destiné à s'appliquer sur le bord d'une ouverture réalisée dans une paroi du véhicule, ladite face apte à être disposée jointive avec une face conjuguée constituant le quatrième côté du rectangle.

Selon un autre mode de réalisation, la plaque-support présente la forme générale d'un rectangle comportant sur deux côtés opposés un rebord destiné à s'appliquer sur le bord d'une ouverture réalisée dans une paroi du véhicule, les deux autres côtés constituant chacun une face apte à être disposée jointive avec une face conjuguée de la plaque-support d'un autre dispositif de montage.

Selon un autre mode de réalisation, au moins une face de la plaque-support présente un joint apte à assurer l'étanchéité entre ladite plaque-support et une plaque-support montée jointive d'un autre dispositif de montage.

Selon un autre mode de réalisation, le maître cylindre générateur de pression hydraulique est intégré dans une plaque-support à deux faces principales, pour constituer un dispositif de montage selon l'invention et le véhicule à moteur comprend un tel maître cylindre.

Selon un autre mode de réalisation de l'invention, le véhicule à moteur comprend deux dispositifs de montage, le premier présentant un organe de commande de débrayage et le deuxième présentant une valve de commande de freinage et, le cas échéant, en outre un organe de commande d'accélérateur du moteur.

Selon un autre mode de réalisation, le véhicule à moteur comprend deux dispositifs de montage qui sont disposés, avec leurs plaques-supports respectives jointives partiellement dans une ouverture réalisée dans la paroi de la cabine de conduite dudit véhicule.

D'autres buts, avantages et caractéristiques apparaîtront à la lecture de la description de divers modes de réalisation de l'invention, faite à titre non limitatif et en regard du dessin annexé, dans lequel :
- la figure 1 représente en vue de dessus. c'est-à-dire en service du côté de la cabine de conduite, et en perspective un dispositif de montage selon l'invention, pour des organes de commande d'accélération, de freinage et de débrayage d'un véhicule industriel, la pédale de frein étant interrompue dans sa partie médiane pour laisser voir l'intérieur d'un boîtier de connexions électriques ouvert ;
- la figure 2 représente en vue de dessous, c'est-à-dire en service du côté extérieur à la cabine de conduite, et en perspective, le dispositif de montage de la figure 1 ;
- la figure 3 représente en vue de dessus et donc, en service, de l'intérieur de la cabine de conduite, et en perspective, la moitié d'un dispositif de montage selon l'invention, placé en position relativement haute dans la cabine de conduite du véhicule, de manière que la pédale de commande amovible et/ou rapportée par accrochage, se trouve en position de "pédale suspendue" ;
- la figure 4 est une vue éclatée en perspective de dessous, et donc en service, de l'extérieur de la cabine, d'un autre mode de réalisation du dispositif de montage selon l'invention, avec deux plaques séparées dont l'une porte un maître-cylindre d'actionnement de débrayage et l'autre porte un robinet de frein double, un espace ou boîtier de connexions et une commande d'accélérateur (séparée latéralement) ;
- la figure 5 représente, en vue latérale et en perspective, la moitié d'un dispositif de montage selon l'invention portant un robinet de frein double et des connexions électriques ; et
- la figure 6 représente, en vue latérale semblable à celle de la figure 5, une moitié du dispositif de montage portant un robinet double tandem à corps rapporté et des connexions électriques,
- la figure 7 représente, en vue fragmentaire partiellement schématique et en coupe, un maître-cylindre intégré à une plaque d'un dispositif de montage selon l'invention ;
- la figure 8 représente, en vue de côté et en coupe, un autre mode de réalisation d'une plaque d'un dispositif de montage selon l'invention intégrant un maître-cylindre à piston oscillant.

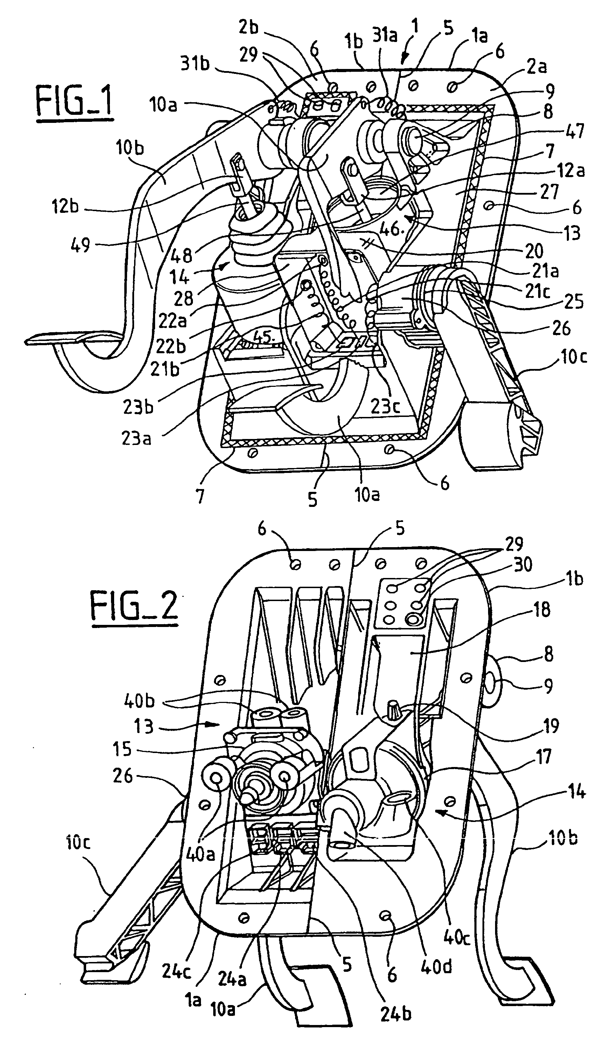

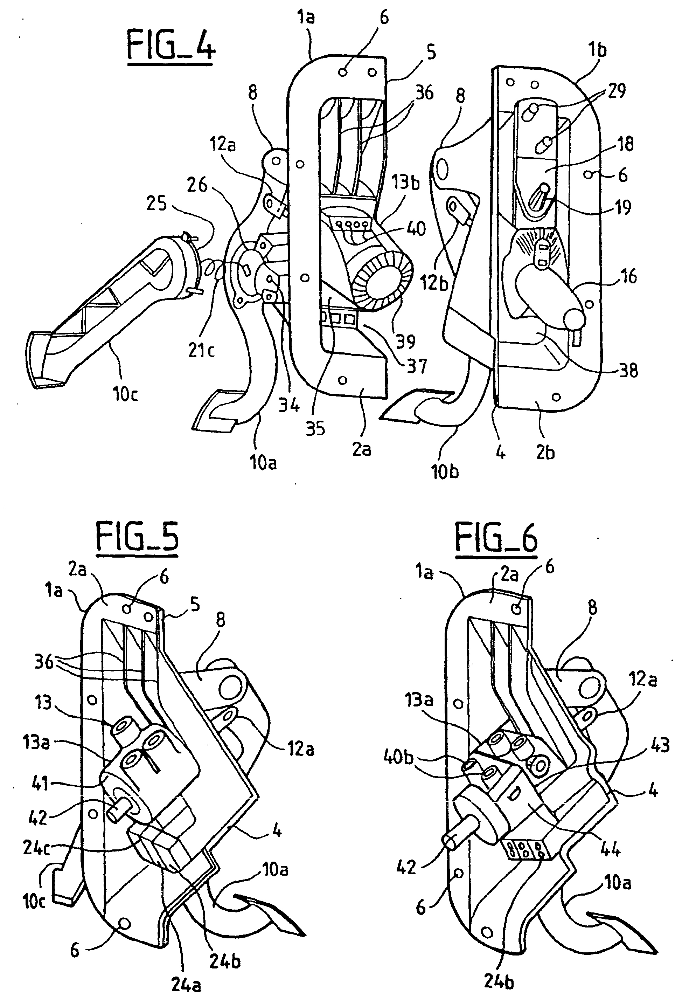

Sur la figure 1, on voit en perspective le dispositif de montage selon l'invention dans la position où il apparaît, vu depuis la cabine de conduite du véhicule sur lequel il est destiné à être monté. L'élément de base de ce dispositif est constitué par un organe de support en forme de plaque 1 à deux faces principales, respectivement une face intérieure et une face extérieure par rapport à la cabine de conduite. La plaque 1 est ici subdivisée en deux demi-plaques 1a et 1b qui sont destinées à être fixées jointives par une bride extérieure ou rebord 2a et respectivement 2b sur le bord conjugué d'une ouverture 3 ménagée à travers la paroi de la cabine de conduite (non représentée) du véhicule. On a indiqué en traits mixtes sur la figure 3, les bords 3b perpendiculaires et sensiblement rectangulaires de l'ouverture 3 qui coopèrent avec le dispositif de montage dont une seule demi-plaque est représentée sur cette figure 3.

Les deux demi-plaques 1a et 1b qui, dans certaines versions de l'invention, peuvent être remplacées par une plaque unique 1, sont réalisées monobloc de fonderie ou de moulage, par exemple en alliage d'aluminium moulé sous pression, et sont fixées jointives de façon sensiblement étanche, par l'intermédiaire d'au moins un joint intercalaire continu 4 (voir les figures 4 à 6), par exemple engagé dans une rainure prévue sur une demi-plaque et présentant un bourrelet souple extérieur venant au contact d'une face conjuguée lisse 5 de l'autre demi-plaque. La fixation de deux demi-plaques jointives sur le bord conjugué de l'ouverture 3 ménagée à travers la paroi de la cabine de conduite, est réalisée par exemple par l'intermédiaire d'une couronne de boulons (non représentés sur les figures) traversant des trous 6 ménagés dans la bride extérieure 2 et des trous conjugués (non représentés) ménagés sur le bord de l'ouverture 3 dans la paroi métallique de la cabine de conduite.

Pour assurer l'étanchéité entre la bride extérieure 2 et le bord de l'ouverture 3 dans la paroi de la cabine de conduite, il est prévu, par exemple interposé sur la surface de la bride 2 apparaissant sur la figure 1 et venant au contact d'un bord de forme générale plane de l'ouverture 3, un joint d'étanchéité continu flexible 7, par exemple en élastomère. Les bords du joint 7 qui débouchent sur la face 5 de jonction de chacune des demi-plaques viennent par exemple en quasi-alignement, comme on le voit sur la figure 1. Le joint flexible 7 est par exemple logé dans une rainure périphérique ménagée sur la face de la bride 2 en contact avec le bord de l'ouverture 3, ou bien il est collé sur la face de la bride 2 pour être intercalé entre cette bride 2 et le bord conjugué de l'ouverture 3.

De façon connue en soi, la plaque 1 ou les demi-plaques 1a et 1b portent par l'intermédiaire de paliers d'axe 8 (un seul est visible sur la figure 1 et deux sont visibles sur la figure 3), un axe de pédale 9 sur lequel est montée pivotante, respectivement une pédale de frein 10a (interrompue pour laisser voir l'intérieur d'un boîtier de connexions) et une pédale de débrayage 10b. On notera que chacune des demi-plaques 1a et 1b comporte son propre axe de pédale 9. Sur la figure 3, on voit que l'axe de pédale 9 est remplacé par les deux branches d'une fourche dont les extrémités en crochet 11a et 11b s'engagent dans les ouvertures en crochets conjuguées 8a, 8b du support de pédale 8 à deux montants solidaires de la demi-plaque 1a.

Chacune des pédales 10 est reliée, comme représenté sur la figure 1, par l'intermédiaire d'une chape 12 (voir la chape de frein 12a et la chape de débrayage 12b) à un poussoir de commande respectif (non représenté sur les figures) d'une valve à fluide sous pression, respectivement d'une valve de commande de freinage 13 et d'une valve de commande de débrayage 14.

Selon une forme de réalisation du dispositif de montage de la présente invention, chacune des valves de commande, respectivement de freinage 13 et de débrayage 14, est une valve de commande par émission d'une pression de fluide et dont au moins le corps principal et l'une des parois de confinement de fluide sous pression (15 pour la valve de commande de frein, voir la figure 2) et/ou de fluide de réserve (par exemple d'huile de réserve d'un maître-cylindre 16 de commande de servo-débrayage (voir la figure 4), sont réalisées par moulages monoblocs avec la demi-plaque qui les porte. Les parois de confinement du fluide de réserve dans le cas de la valve de commande de débrayage 14 à servo-assistance à l'air comprimé (paroi de confinement 17) sont situées à l'intérieur d'un boîtier de réserve 18 ménagé monobloc avec la plaque 1b et fermé par un bouchon de remplissage 19.

Selon une autre forme de réalisation du dispositif de montage, la plaque à deux faces 1 (ici la demi-plaque 1a) comporte, venu monobloc de fonderie ou de moulage avec la plaque, un boîtier de connexions 20. Ce boîtier 20 est ouvert sur la face intérieure à la cabine de conduite et à l'intérieur sont établies, à travers la paroi du boîtier, des liaisons électriques et/ou électroniques respectives :
- 21 a entre d'une part un capteur 22a coopérant avec la valve 13 de commande de freinage, par exemple un capteur de déplacement, et d'autre part un connecteur 23a ;
- 21b entre d'une part un capteur 22b coopérant avec la valve de débrayage 14, en fait ici de servo-débrayage, par exemple un capteur 22b de course de débrayage, et d'autre part un connecteur 23b ;
- 21c entre d'une part un capteur (non visible sur la figure 1) de commande d'accélération, par exemple un capteur électronique de l'angle de rotation de la pédale d'accélérateur 10c, et d'autre part un connecteur de moteur 23c. On notera que la pédale 10c actionne un organe de commande 25 électrique et/ou électronique du moteur du véhicule logé dans un boîtier d'accélérateur 26 situé sur une face latérale 27 de la demi-plaque la et donc logé entièrement, y compris la liaison 21c de capteur, sur la face intérieure de la plaque 1a.

Les connecteurs de branchement électrique et/ou électronique 23a, 23b, 23c traversent la paroi du boîtier 20, en principe de façon étanche, pour déboucher sur la face extérieure par des bornes de branchement 24a, 24b et 24c (voir la figure 2). L'intérieur du boîtier 20, ouvert sur la face intérieure de la plaque (ou demi-plaque) à deux faces, est susceptible d'être fermé par rapport à l'intérieur de la cabine de conduite, par exemple pour protéger les liaisons électriques et/ou électroniques, par un couvercle amovible 28 (on voit sur la figure 1 un fragment de ce couvercle 28).

Selon une autre forme de réalisation du dispositif de montage d'organes de commande de la présente invention, la plaque à deux faces 1 ou au moins l'une 1b des demi-plaques porte des passages passe-cloison réservés 29. Ces passages passe-cloison 29 permettent la traversée aisée et/ou étanche entre l'extérieur et la cabine de conduite d'une liaison à fluide sous pression et/ou électrique et/ou électronique. Chaque passage passe-cloison 29 peut être obturé par un bouchon 30 lorsqu'il n'est pas utilisé.

Chacune des pédales d'actionnement est rappelée par un ressort en position inactive. On a représenté schématiquement sur la figure 1 des ressorts de rappel 31a et 31b des pédales 10a et 10b, constitués par des ressorts de traction, le ressort de rappel de la pédale d'accélérateur 10c n'étant pas visible dans le boîtier d'accélérateur 26. La pédale de commande des valves à fluide constituant les organes de commande peut également être rappelée en position inactive par le ressort de rappel interne à cette valve de commande et agissant sur le poussoir d'actionnement de la valve, comme c'est le cas dans le mode de réalisation représenté à la figure 3. Dans la solution de la figure 3, la pédale 32 d'actionnement de la valve de commande de débrayage est rappelée en position inactive par un poussoir 33 d'actionnement de la valve de débrayage (le poussoir 33 caché par la pédale 32 est représenté en tirets), lui-même rappelé par un ressort interne à la valve. C'est précisément la force de réaction transmise à la pédale 32 par le poussoir 33 qui maintient en position les extrémités 11a, 11b de la fourche à deux branches au contact des ouvertures en crochet conjuguées 8a, 8b du support de pédale 8.

Selon une variante, dans le cas où l'actionnement du débrayage du moteur du véhicule est réalisé par une commande automatisée, il est possible de rendre la pédale 32 d'actionnement du débrayage amovible, cette pédale 32 n'étant mise en place, par exemple par le chauffeur du véhicule, que dans le cas où la commande automatisée de débrayage est défaillante. La mise en place s'effectue alors par pression et appui simple, le cas échéant encliqueté, sur le poussoir 33 en glissant les extrémités 11a, 11b des branches de fourche dans les ouvertures en crochets 8a, 8b. Lorsqu'elle est actionnée par le conducteur du véhicule, la pédale 10a ou 10b provoque un déplacement du poussoir d'actionnement (non représenté) de la valve de commande 13 ou 14 par l'intermédiaire de la chape de liaison 12a, 12b, et la timonerie (non représentée) actionnée par cette chape est susceptible d'exciter respectivement le capteur 22a indiquant le début de l'actionnement des freins et le capteur 22b indiquant que la commande de débrayage a effectué la course normale minimale de débrayage.

On voit sur la figure 4 en vue éclatée les deux demi-plaques 1a et 1b séparées et l'organe de commande d'accélérateur 25 avec sa pédale 10c extrait de son boîtier d'accélérateur 26 avec son câble de liaison électrique et/ou électronique 21c qui traverse un passage 34 ménagé dans le fond du boîtier 26 pour venir se placer à l'intérieur du boîtier de connexions 20. La valve de commande de freinage 13b est constituée ici par un robinet de frein double (à deux circuits parallèles actionnés simultanément). Le corps de ce robinet de frein double, de largeur relativement importante, est logé dans une cavité 35 de la demi-plaque 1a, ménagée du côté extérieur de cette plaque avec des nervures ou profilés 36 de renforcement et/ou de raidissement. Une autre cavité 37 est prévue pour recevoir un boîtier de connexions électriques. Sur la demi-plaque 1b représentée à la figure 4, on voit que le maître-cylindre 16 de commande de débrayage est logé partiellement dans une cavité 38 ménagée sur la face extérieure de la plaque 1b.

Le robinet de frein double 13b représenté à la figure 4 présente une couronne d'échappement 39 et des raccords de liaison de fluide 40 qui débouchent sur la face extérieure de la demi-plaque 1a et qui sont aptes à recevoir une connexion de fluide par enfichage selon un axe sensiblement parallèle à l'axe de symétrie du robinet de frein double 13b à deux détendeurs de fluide sous pression parallèles. Sur la figure 2, on voit des raccords de liaison de fluide de la valve de freinage 13 qui tous débouchent sur la face extérieure de la demi-plaque 1a et pour certains, 40a, sont orientés selon l'axe de la valve, et pour d'autres, 40b, sont orientés perpendiculairement à l'axe principal de la valve de freinage 13.

Sur 1a face extérieure de la demi-plaque la représentée à la figure 5, on voit que le corps 13a de la valve de freinage 13 est formé monobloc avec la demi-plaque et est fermé par un fond rapporté 41 qui présente un raccord d'échappement 42. Sur la demi-plaque représentée sur la figure 6, on utilise un robinet de frein de type tandem ou série, le corps de valve 13a de la valve de freinage du premier circuit est formé monobloc avec la demi-plaque 1a et présente une face d'assemblage 43 débouchant sur la face extérieure de la demi-plaque et sur laquelle est assemblé et fixé par des vis un corps de valve de prolongement 44 constituant la valve de commande du deuxième circuit de freinage, avec son raccord d'échappement 42 et ses raccords d'alimentation et de sortie latéraux 40b.

Comme on le voit sur les figures, le dispositif de montage des organes de commande à pédale d'un véhicule, en forme générale de plaque à deux faces, est constitué de deux demi-plaques séparées 1a, 1b, présentant un rebord ou bride de fixation 2a, 2b sur trois côtés sur quatre et susceptibles d'être fixées sur la paroi de ladite cabine de conduite, jointives de façon sensiblement étanche par leurs côtés sans rebord de fixation, pour fermer complètement ladite ouverture ménagée à travers une paroi de la cabine de conduite. L'une, la, des demi-plaques porte la valve de commande de freinage 13, tandis que l'autre demi-plaque 1b porte la valve de commande de débrayage 14. Chaque demi-plaque porte sur sa face intérieure, la pédale d'actionnement 10a, 10b de sa valve de commande avec l'axe d'articulation 9 de cette pédale disposé à proximité d'un petit côté de la forme générale rectangulaire de la demi-plaque.

Les demi-plaques 1a, 1b comportent sur leur face intérieure une forme en bossage (voir les bossages 45 et 46 à la figure 1) présentant un passage d'actionnement 47 (dans le bossage 46 de la figure 1), du côté intérieur du dispositif, pour la valve de commande correspondante de freinage ou de débrayage. Ce passage d'actionnement 47 est traversé par une tige d'actionnement de valve 48, 49 reliée mécaniquement à la pédale correspondante 10a, 10b par la chape respective 12a, 12b.

Comme on le voit sur la figure 1, la demi-plaque 1a portant la valve de freinage 13 comporte une commande de moteur 25 (d'accélérateur) susceptible de pivoter avec sa pédale d'accélérateur 10c autour d'un axe sensiblement parallèle à l'axe 9 des pédales de freinage et/ou de débrayage. La commande de moteur 25, avec sa pédale 10c, est montée dans un boîtier de commande de moteur 26 solidaire de la paroi latérale 27 de la demi-plaque 1a, paroi qui est ménagée à proximité du bord long du rebord ou bride de fixation 2a sur le grand côté de la forme générale rectangulaire de la demi-plaque 1a portant la valve de freinage. Le boîtier de commande de moteur 26 est ainsi situé entièrement sur la face intérieure de la demi-plaque 1a portant la valve de freinage, de façon à protéger la commande électronique d'accélérateur contre toutes les agressions susceptibles d'être provoquées par l'ambiance extérieure.

La préparation du dispositif de montage selon l'invention est réalisée de la façon décrite ci-après. Chacune des demi-plaques 1a, 1 b est équipée de sa valve de commande respective 13, 14 en agissant sur les deux faces de la demi-plaque alors parfaitement accessibles et disponibles. La paroi 27 est ensuite équipée de la commande d'accélérateur 25 avec sa pédale 10c. Ensuite, les pédales correspondantes 10a, 10b des valves de commande 13, 14 par émission de fluide sont mises en place, par liaison avec leur axe de pivotement 9 et avec la timonerie d'actionnement de valve via la chape 12a et les tiges d'actionnement 48, 49, les capteurs de course ou d'actionnement étant mis en position au contact ou à proximité de cette timonerie. Il reste à raccorder les liaisons électriques et/ou électroniques 21a et 21c à l'intérieur du boîtier de connexions 20, la liaison de débrayage étant en attente de l'enfichage dans une prise de détection de la course de débrayage, solidaire de la plaque 1b. Le remplissage en fluide hydraulique du circuit de commande de débrayage est ensuite effectué et les deux demi-plaques 1a et 1b, après essayage ou test de la performance, sont ensuite prêtes à être stockées avant montage sur un véhicule, les raccords de fluide étant obturés par un bouchon et les raccords électriques et/ou électroniques par un capuchon.

Au montage des demi-plaques 1a et 1b complètes dans une cabine de véhicule, avec leurs valves de commande respectives 13 et 14 complètes, les deux demi-plaque sont mises en position dans l'ouverture 3 ménagée à travers la paroi de la cabine de conduite du véhicule, en commençant par la plaque 1a qui déborde en service au-delà de l'ouverture 3 par la commande d'accélérateur 25, 26 et sa pédale d'actionnement 10c. Les pédales 10a et 10b qui pourraient déborder au-delà de l'ouverture 3 ménagée dans la paroi de la cabine du véhicule, sont introduites en premier dans l'ouverture 3 et ensuite les demi-plaques viennent se placer frontalement au contact du bord de l'ouverture 3 par le joint d'étanchéité 7.

Lorsque les deux demi-plaques 1a et 1b sont en position sur la paroi de la cabine du véhicule, jointives de façon quasi étanche, avec interposition du joint d'étanchéité 4 au contact d'une face conjuguée 5, le joint d'étanchéité 7 est en position sur le bord de l'ouverture 3 et il est possible de fixer les brides ou rebords 2a, 2b des plaques en montant par exemple des boulons à travers les trous 6 ménagés dans ces brides et à travers des trous conjugués ménagés dans la paroi de la cabine de conduite au voisinage du bord de l'ouverture 3. Pour terminer le montage sur le véhicule, du côté de l'intérieur de la cabine de conduite, il reste à raccorder la liaison électrique 21b solidaire de la plaque 1a dans le boîtier de connexions 20 à un raccord à enfichage relié au capteur de course 22b solidaire de la demi-plaque 1b.

Sur la face extérieure à la cabine de conduite que l'on voit apparaître à la figure 2, les différents raccords de fluide : 40a, 40b du côté de la valve de freinage, 40c pour l'alimentation en air comprimé de la valve d'assistance de débrayage, 40d pour l'alimentation en fluide hydraulique de débrayage, etc. sont reliés à des conduites de fluide correspondantes en attente à l'extérieur de la cabine du véhicule. De même, les bornes de branchement extérieur 24a, 24b, 24c débouchant sur la face extérieure sont raccordées à des faisceaux de fils en attente à l'extérieur de la cabine. Les passages passe-cloison 29 sont éventuellement munis d'un circuit de fluide ou électrique de traversée, après enlèvement de leur bouchon.

On doit comprendre que ce n'est que pour des raisons d'encombrement et d'économie de réalisation, qu'un seul boîtier de connexions 20 est prévu et intègre les liaisons électriques de la commande de débrayage située sur l'autre demi-plaque 1b, mais que chaque demi-plaque pourrait être dotée de son boîtier de connexions propre, afin d'éviter d'avoir à établir, au montage, des liaisons électriques traversant d'une demi-plaque à l'autre.

De même, selon un autre mode de réalisation, on pourrait prévoir une ouverture 3 de plus grande taille et, le cas échéant, un moindre écartement entre les pédales de frein 10a et d'accélérateur 10c, de manière que les demi-plaques 1a et 1b puissent être montées frontalement à travers l'ouverture 3 sans avoir à passer d'abord les pédales en biais dans l'ouverture 3. Les deux demi-plaques la et 1b pourraient également être remplacées par une plaque unique de la façon déjà connue dans la construction des véhicules industriels.

L'avantage de l'utilisation des demi-plaques la et 1b à la place d'une grande plaque unique réside dans une plus grande facilité de montage des valves de commande et aussi dans la possibilité, en cas de défaillance de l'un des organes de commande (de freinage, de débrayage, d'accélérateur), de changer rapidement la totalité de la plaque de montage qui porte cet organe défaillant, sans avoir à procéder à des démontages tortueux. La plaque ou les demi-plaques de montage selon l'invention peuvent ne pas comporter 1a commande d'accélérateur et peuvent bien entendu être disposées de façon à réaliser des pédales suspendues comme cela est partiellement représenté à la figure 3, selon une solution considérée comme la plus confortable pour les chauffeurs et qui présente l'avantage de dégager le plancher de la cabine de conduite du véhicule.

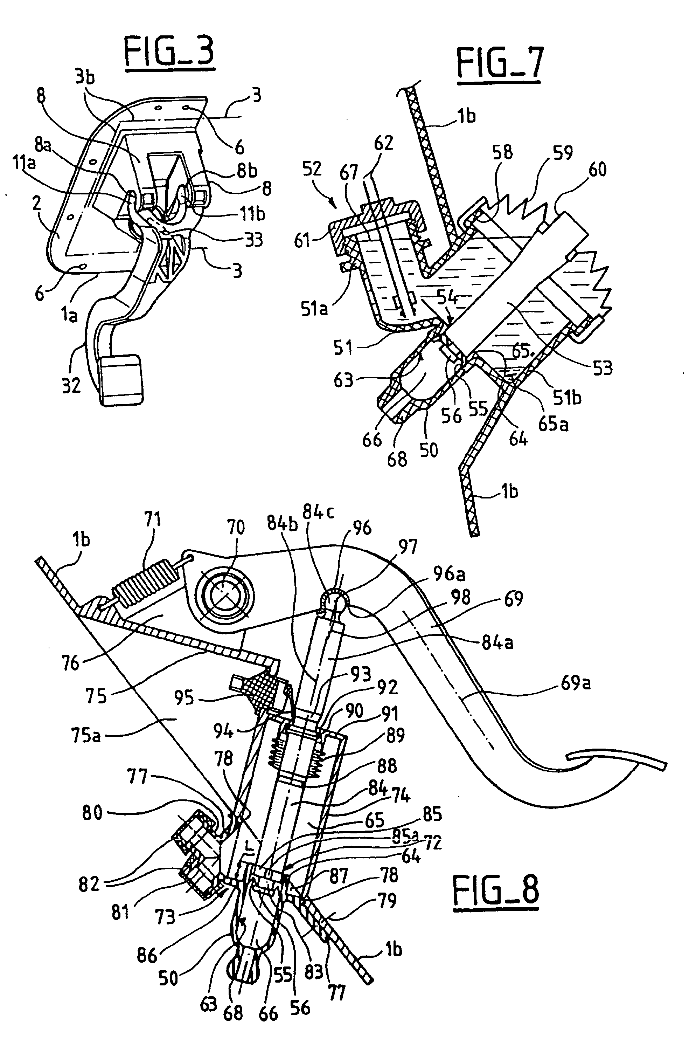

On a représenté en coupe sur la figure 7, une plaque de montage 1b destinée en principe à être associée à une plaque 1a (non représentée) de support de commande de freinage et qui est formée monobloc avec le corps de cylindre 50 du maître-cylindre 52 et le corps 51 du récipient de liquide hydraulique de réserve. Le corps 51 du récipient se compose en fait d'une partie de bouchon et de contrôle 51a qui est réalisée monobloc, par exemple en matière plastique résistante moulée par injection sous pression, et d'une partie 51b de capacité et de décantation. La partie 51b du corps de récipient 51 est traversée, en biais selon la figure 7, par un poussoir 53 du piston 54 du maître-cylindre. Le piston 54 est, pour l'essentiel, constitué d'une garniture d'étanchéité à lèvres 55 montée de façon retenue par un ergot central 56 à l'extrémité du poussoir 53. Un diaphragme élastique 59, par exemple en élastomère, est monté de façon serrée et relativement étanche, respectivement sur un rebord 58 de la partie 51b de récipient et sur une portée 60 du poussoir 53. La partie de bouchon 51a du récipient est fermée par un bouchon vissé 61 portant des électrodes 62 de contrôle de niveau du liquide hydraulique dans le récipient 51 formant réservoir, quand ce dernier est fermé.

Selon une caractéristique du maître-cylindre intégré représenté à la figure 7, l'alésage intérieur 63 (en principe brut de moulage) du corps 50 de maître-cylindre comporte au moins une rainure axiale 64 partant de l'entrée (en principe légèrement évasée pour faciliter l'entrée de la garniture d'étanchéité à lèvre 55) de l'alésage 63 et s'étendant sur une longueur suffisante pour que, en position rétractée maximale du piston (position de recul inactive), telle que représentée sur la figure 7, une communication soit établie entre l'intérieur 65 du récipient de réserve ou réservoir 51 et l'intérieur 66 de la chambre cylindrique du maître-cylindre, pour réalimenter une éventuelle consommation de liquide hydraulique du maître-cylindre.

On va maintenant expliquer le fonctionnement du maître-cylindre 52 intégré à sa plaque-support, tel que représenté sur la figure 7. La plaque-support 1b est par exemple fixée sur la paroi d'une cabine de véhicule, dans l'orientation représentée par rapport à la verticale du lieu, et le niveau 67 du liquide hydraulique du récipient 51 s'établit comme représenté en mettant en charge hydraulique la partie basse du diaphragme 59. Le corps de maître-cylindre 50 est raccordé par son raccord 68 à un circuit hydraulique à actionner, par exemple un circuit de servo-débrayage hydropneumatique à suivi hydraulique de la course de débrayage. Lorsqu'on actionne le poussoir 53 pour le déplacer vers la gauche de la figure 7 (par exemple à l'aide d'une pédale d'actionnement non représentée), la garniture d'étanchéité à lèvres 55 dépasse la (où les) rainures de réalimentation 64 et la chambre intérieure 66 de l'alésage 63 est alors isolée et pressurisée pour refouler du liquide hydraulique sous pression par le raccord 68. Au retour vers la position de recul inactive telle que représentée sur la figure 7, si une consommation de liquide hydraulique faible s'est manifestée pour divers raisons (petite fuite, usure de garnitures de friction, échauffement transitoire d'une partie du circuit hydraulique, etc.), une légère dépression s'établit au recul de la garniture à lèvres 55 et aspire le liquide du récipient 51 à travers la ou les rainures 64 dans la chambre intérieure 66 de l'alésage, et de là si nécessaire dans le circuit hydraulique. On remarquera que la partie 51b du corps de réservoir 51 présente une capacité intérieure de décantation 65a, dans laquelle peuvent être rassemblées et stockées les impuretés abrasives et corrosives (eau) du liquide hydraulique en dessous de la plus basse rainure axiale 64, de telle façon que ces impuretés ne puissent jamais être aspirées par les rainures 64 et injectées dans le circuit hydraulique à partir du raccord 68.

Pour le mode de réalisation représenté sur la figure 8 d'une plaque-support 1b intégrant un maître-cylindre hydraulique, on a représenté en vue de côté la pédale d'actionnement 69 montée sur un axe de rotation 70 et accrochée à un ressort de traction 71 de rappel en position inactive du piston 72 du maître-cylindre 73. Le corps du maître-cylindre est ici constitué de deux pièces assemblées. La première pièce du corps de maître-cylindre est un corps de réservoir 74 de forme générale cylindrique coupée en biais et venu monobloc par moulage, par exemple ici en alliage d'aluminium moulé, avec le reste de la plaque 1b présentant une équerre 75 de fixation de l'axe de pédale 70 par l'intermédiaire de deux pattes de palier 76. La deuxième pièce du corps de maître-cylindre est un ensemble fond de réservoir-corps de cylindre 77 réalisé monobloc, par exemple en matière plastique résistante moulée par injection sous pression.

L'ensemble fond de réservoir-corps de cylindre 77 est fixé sur le corps de réservoir 74 et la plaque-support 1b, avec interposition d'un joint d'étanchéité 78 de forme ellipsoïdale, à cause de la coupe en biais du corps de réservoir cylindrique, par des moyens de fixation classiques tels que vis, boulons, rivets dont seul l'un 79 des axes est représenté. Dans le mode de réalisation représenté à la figure 8, le fond de réservoir 77 comporte deux raccords 80 et 81 d'alimentation en fluide hydraulique par gravité depuis un réservoir de fluide hydraulique placé à distance et raccordé au raccord par un tube flexible. Le réservoir de fluide hydraulique n'est pas représenté sur la figure 8 où les raccords 80 et 81 sont obturés chacun, en situation de livraison, par des bouchons 82.

Le corps de cylindre 50 de l'ensemble monobloc 77 est similaire au corps de cylindre 50 représenté à la figure 7 et il présente, au débouché de son alésage 63 dans la chambre intérieure 65 du réservoir de fluide hydraulique 74, 77, au moins une rainure 64 se prolongeant axialement sur une longueur suffisante dans l'alésage 63 pour qu'en position rétractée maximale du piston 72 (position de recul inactive telle que représentée à la figure 8), une communication soit établie entre l'intérieur 65 du réservoir de fluide hydraulique et l'intérieur 66 de la chambre de pression du corps de cylindre 50, comme dans le mode de réalisation représenté à la figure 7.

La garniture d'étanchéité annulaire à lèvres 55 est montée dans une rainure annulaire 83 en étant retenue par un rebord central 56, d'une façon similaire au mode de réalisation représenté à la figure 7. A la différence du mode de réalisation représenté à la figure 7, la rainure 83 qui porte la garniture d'étanchéité est reliée à une tige poussoir 84, articulée à l'extrémité opposée au piston 72, à la pédale d'actionnement 69, par une surface d'appui rotulante 85 constituée ici par exemple de petits ergots 85a, à surface extérieure d'appui de forme générale sphérique. La surface d'appui rotulante 85 reste engagée dans l'alésage 63 du corps de cylindre, même dans la position de recul maximale représentée sur la figure 8. Dans ce mode de réalisation, les rainures axiales 64 de réalimentation doivent présenter une longueur axiale légèrement supérieure à la largeur de la lèvre 55 du joint annulaire d'étanchéité, majorée de la largeur de la surface d'appui rotulante 85. Les rainures axiales 64, pour assurer une réalimentation sûre, s'étendent sur la longueur L représentée sur la figure 8 et qui correspond sensiblement à la longueur de saillie du corps de cylindre 50 vers l'intérieur de la chambre de réservoir 65, à partir de la cloison 86 qui relie le fond de réservoir de la pièce monobloc 77 au corps de réservoir 50. Il est ainsi possible de prévoir pour cette partie 86 du corps 50 en saillie vers l'intérieur 65 du réservoir et qui ne risque jamais d'être soumise à la pression de refoulement, une épaisseur de matériau plus faible que pour le reste du corps 50 qui est soumis à la pression de refoulement du maître-cylindre. On remarquera que la saillie du corps de cylindre 50 vers l'intérieur, sur la longueur L délimite une capacité de décantation 87, de façon analogue et même plus favorable que pour la solution représentée à la figure 7.

La tige-poussoir 84 qui traverse le corps cylindrique 74 du réservoir de fluide hydraulique présente une gorge 88 d'accrochage étanche du bord d'un soufflet 89 dont l'autre bord est monté sur un manchon 90 de la paroi supérieure 91 du corps de réservoir 74. Le manchon 90 porte un épaulement de butée de recul 92 sur la tige poussoir 84 qui présente une surface conique de rampe 93 coopérant avec une languette d'actionnement 94 d'un contact électrique et/ou électronique 95 de détection d'actionnement du maître-cylindre, engagé et/ou encliqueté dans un logement ménagé dans l'équerre 75 de la plaque-support 1b. La liaison entre la pédale 69 et la tige-poussoir 84 est réalisée, dans ce mode de réalisation, par une liaison à rotule 96 représentée schématiquement sur la figure 8. Le centre 97 de la rotule se déplace ainsi sur un cercle 98 centré sur l'axe 70 lorsque la pédale 69 est actionnée (lorsqu'on appuie sur la pédale 69). Au cours de son déplacement axial d'actionnement, la tige-poussoir 84 effectue ainsi un pivotement de quelques degrés d'angle qui est rendu possible par le jeu important existant entre l'alésage de passage ménagé à travers la cloison 91 du réservoir 74 (en fait dans le manchon 90) et la partie cylindrique 84a sur la tige-poussoir 84.

Le fonctionnement du maître-cylindre 73 intégré à sa pédale d'actionnement et à sa plaque de montage, tel que représenté à la figure 8, se déduit en partie de celui qui a été expliqué en relation avec la figure 7. La chambre de réservoir 65 reliée par le raccord 80 ou 81 à un réservoir extérieur de fluide hydraulique non représenté, est complètement remplie de fluide hydraulique jusqu'au soufflet 89, à la différence de la chambre de récipient représentée à la figure 7 et qui présente un niveau de liquide 67. Lorsqu'un opérateur actionne la pédale 69 en la pressant vers le bas, l'axe d'articulation 97 de la tige-poussoir 84 sur la pédale se déplace vers le bas selon l'arc de cercle 98 centré sur l'axe d'articulation 70 de la pédale. La tige poussoir 84 repousse la garniture d'étanchéité 55 vers le bas, la lèvre d'étanchéité extérieure de cette garniture annulaire isolant, après une très faible course, la ou les rainures 64 de la chambre intérieure 66 du corps 50 de maître-cylindre. Le fluide hydraulique contenu dans la chambre de cylindre 66 est alors d'une part refoulé par le raccord 68 vers un ou plusieurs organes alimentés tels qu'un servo-débrayage à commande hydro-pneumatique et d'autre part, pressurisé par l'effort axial exercé sur le piston 72. Les quelques degrés d'angle d'oscillation au cours du déplacement axial de la tige-poussoir 84, du fait du déplacement du centre 97 sur le cercle 98, sont absorbés sans difficulté par la lèvre de la garniture d'étanchéité 50 dont le rattachement à la rainure 83 subit une flexion, et les efforts radiaux provoqués par la réaction de la pression hydraulique régnant dans la chambre 66 et agissant sur le piston 72 légèrement désaxé par rapport à l'axe de l'alésage 63, sont absorbés par l'appui rotulant des ergots 85a de la surface rotulante 85 sur la paroi intérieure de l'alésage 63. Cet appui rotulant sur la surface d'alésage 63 lubrifiée ne provoque en effet que des efforts de friction axiaux très faibles.

Dès le début du déplacement axial de la tige-poussoir 84, la languette 94 passe du contact avec la rampe conique 93 au contact avec la surface cylindrique 84a et actionne le contact d'actionnement 95 qui libère par exemple un circuit d'actionnement de la commutation de rapport de transmission. Lorsque l'opérateur relâche la pression qu'il exerçait sur la pédale 69, la pression hydraulique régnant dans la chambre 66 repousse énergiquement vers le haut la tige-poussoir 84 et après une certaine course de rappel du piston 72, la pression dans la chambre 66 diminue du fait des pertes de charge au refoulement dans les conduites de liaison avec le raccord 68 du corps 50. Le ressort de rappel de traction 71 prend alors le relais pour rappeler la pédale 69 vers le haut et, via la liaison à rotule 96 efficace dans les deux sens, la tige-poussoir 84 et le piston 72 vers le haut.

Dans le cas où une dépression s'établit dans la chambre de pression hydraulique 66 en fin de rappel du piston 72 par le ressort 71, cette dépression ne peut être compensée que par une entrée du liquide hydraulique de la chambre 65 car aucune liaison d'étanchéité du piston 72 ne débouche sur l'atmosphère. Comme expliqué déjà pour le mode de réalisation de la figure 7, dès que la lèvre de la garniture d'étanchéité 50 dépasse là ou les rainures axiales 64, une communication de réalimentation s'établit entre la chambre hydraulique 65 du réservoir de fluide hydraulique et la chambre de cylindre 66. Bien entendu, la réalimentation du maître-cylindre 50 peut être réalisée par tous les moyens connus, à la place des rainures axiales 64, et notamment par un perçage ou passage transversal qui débouche sur la paroi intérieure de l'alésage 63 et est obturé par le déplacement axial de la lèvre extérieure de la garniture annulaire 55, ou bien par la prise de contact entre un poussoir cylindrique rectifié au poli miroir et la lèvre intérieure de la garniture annulaire 55.

Le mode de réalisation de la figure 8 permet d'utiliser, pour la réalisation du maître-cylindre intégré, les matériaux les mieux adaptés, les joints de réservoir (joint ellipsoïdal 78 et soufflet 89) ne supportant au plus qu'un mètre de colonne d'eau de pression. La pièce 77 de fond de réservoir et de corps de cylindre est ainsi réalisée en matière plastique à bonne résistance mécanique et à bon coefficient de frottement, tandis que la plaque support 1b est par exemple réalisée en alliage d'aluminium résistant, léger et facile à mouler, et que la tige poussoir 84 et la pédale 69 sont réalisées en acier présentant une résistance élevée aux efforts de traction et de compression. On notera en particulier que la liaison à rotule 96 peut être réalisée avec un certain effet d'encliquetage. En effet, la portée ou ouverture de rotule 96a formée dans le corps de pédale découpé en acier, peut être orientée de telle façon qu'en plaçant la tige-poussoir avec son axe longitudinal 84b orienté de façon sensiblement parallèle au bras de pédale long (axe 69a), il soit possible d'encliqueter en exerçant un effort axial limité, la tête de rotule 84c ménagée sur la tige-poussoir 84, dans la cavité de rotule 96a. Lorsque la tige poussoir 84 est ensuite ramenée dans la position représentée sur la figure 8 par pivotement de l'articulation à rotule 96, la tête de rotule 84c est alors fermement encliquetée dans la cavité de rotule 96a et un effort de rappel important de l'ordre de quelques daN peut être exercé sur la tige-poussoir 84 par une traction sur la liaison à rotule 96 exercée par le ressort de rappel 71. Dans le cas où les raccords 80 et 81 de liaison à un réservoir de fluide hydraulique ne sont pas utilisés ou pas prévus, on pourrait bien sûr étendre le réservoir de fluide hydraulique à l'intérieur 75a de l'équerre 75 où apparaît une capacité vide disponible. Il ne faut cependant pas négliger l'accessibilité des zones de raccordement telles que les raccords 68, 80, 81 au cours du montage définitif de la plaque-support 1b sur la paroi de la cabine d'un véhicule.

La pression hydraulique émise au raccord 68 du corps de cylindre à partir d'une commande par pédale peut être utilisée à des fins variées dans un véhicule. L'actionnement d'un organe de servo-débrayage a déjà été mentionné, mais il est évident que la pression hydraulique pourrait actionner un circuit de freinage alimenté par une source de pression hydraulique ou pneumatique en agissant comme pression pilote, par exemple pour un circuit de freinage à anti-blocage ou à anti-enrayage dénommé couramment "freinage ABS". Un intérêt de la disposition de la figure 8 réside dans le fait que si la capacité d'émission du corps de maître-cylindre 50 est réduite (quelques centimètres cubes), il est par contre possible d'émettre à des pressions élevées, de l'ordre de la centaine de bars, convenant pour des commandes à distance (faible perte de charge relative du déplacement hydraulique). Par ailleurs, le réservoir de fluide hydraulique est peu encombrant et le risque de rentrée d'air au rappel du piston (risque important pour les commandes à distance qui créent des pertes de charge s'opposant au retour rapide du liquide hydraulique) est pratiquement nul.

Pour le montage du maître-cylindre intégré à sa pédale et à sa plaque-support, tel que représenté à la figure 8, dans des emplacements où l'extérieur (par rapport à la cabine de conduite) de la plaque 1b est quasi inaccessible manuellement, il est possible de pousser dans l'emplacement peu accessible un tube de raccord flexible (par exemple un tube mince en matière plastique résistante), de fixer ce tube de raccord flexible au raccord 68, de remplir le réservoir 77, 74, piston 72 retiré, et ensuite d'engager le piston 72 dans l'alésage 63 évasé à son entrée, de remettre en place le manchon 90 qui serait alors amovible et, le maître-cylindre étant rempli de fluide hydraulique et raccordé à son tube flexible de refoulement, de fixer la plaque-support 1 b sur le rebord du passage ménagé dans la paroi de la cabine du véhicule. Le corps 50, 77 du maître-cylindre et son tube flexible de raccordement de conduite sous pression, ainsi que le tube flexible de raccordement au raccord 80 ou 81 (raccordé préalablement à la mise en place définitive de la plaque support 1b), viennent ainsi se loger sans problème dans un endroit inaccessible où les éléments qui y sont logés sont rendus en fait accessibles par le retrait de la plaque support 1b. La pédale 69 pourrait être remplacée par une pédale en matière plastique analogue à la pédale 32 et montée comme cette dernière par accrochage sur des éléments en forme de crochets, comme représenté à la figure 3.

## Revendications

1. Dispositif de montage d'au moins un organe de commande à fluide sous pression (13, 14) actionné par levier ou pédale (10a, 10b, 32, 69), pour véhicule à moteur, comprenant un support (1) en forme générale de plaque, présentant deux faces principales, sur lequel ledit organe de commande à fluide sous pression présentant au moins un corps principal réalisé par moulage est agencé de sorte à traverser la plaque-support d'une face principale à l'autre face principale, ledit levier ou pédale associé étant monté du côté d'une première face principale de 1a plaque-support, **caractérisé en ce que** la plaque-support (1a, 1b) est formée rigide et monobloc par moulage et **en ce que** le corps principal ou d'assemblage (13a, 13b, 16, 50, 51, 74) de l'organe de commande à fluide sous pression (13, 14, 16, 52, 73) est réalisé monobloc avec la plaque-support (1a, 1b).

2. Dispositif de montage selon la revendication 1, **caractérisé en ce qu'**au moins l'une (15, 17, 50, 51, 74) des parois de confinement de fluide dudit organe à fluide sous pression (13, 14, 52, 73) est réalisée monobloc avec la plaque-support (1).

3. Dispositif de montage selon l'une quelconque des revendications 1 ou 2, **caractérisé en ce que** ledit levier ou pédale associé (10a, 10b, 10c, 69) est monté pivotant sur un axe (9, 70) porté par un palier (8, 76) formé monobloc avec la plaque-support (1).

4. Dispositif de montage selon l'une quelconque des revendications 1 à 3, **caractérisé en ce que** ledit levier ou pédale associé (32) présente une fourche dont les extrémités en crochets (11a, 11b) s'engagent dans des ouvertures en crochets conjuguées (8a, 8b) réalisées dans un palier (8) formé monobloc avec la plaque-support.

5. Dispositif de montage selon l'une des revendications 1 à 4, **caractérisé en ce que** ledit organe de commande à fluide sous pression est un robinet de frein double (13b) dont les raccords de fluide (40) sont disposés sensiblement parallèles à l'axe de symétrie du robinet de frein double.

6. Dispositif de montage selon l'une des revendications 1 à 4, **caractérisé en ce que** ledit organe de commande à fluide sous pression est un robinet de frein tandem dont le corps principal (13a) est réalisé monobloc avec la plaque-support et présente une face (43) de réception d'un deuxième corps rapporté (44).

7. Dispositif de montage selon l'une quelconque des revendications 1 à 6, dans lequel, de façon connue en soi, ledit organe de commande à fluide sous pression est un maître-cylindre (52) à fluide hydraulique, **caractérisé en ce qu'**au moins une partie du corps (50) et/ou du récipient de réserve (51, 74) de fluide hydraulique est réalisée monobloc avec la plaque-support (1b).

8. Dispositif de montage selon la revendication 7, **caractérisé en ce que** ledit récipient de réserve (51, 74) est fermé par un soufflet élastique (59, 89) relié, à une extrémité, à un rebord annulaire (58) du récipient de réserve (51) et, à l'autre extrémité, à un poussoir ou plongeur mobile (53, 84) du maître-cylindre traversant ledit récipient de réserve.

9. Dispositif de montage selon la revendication 7 ou 8, **caractérisé en ce que** le piston (54) du maître-cylindre comporte un poussoir (53) qui traverse ledit récipient de réserve (51) et porte une garniture d'étanchéité annulaire à lèvre (55) qui coopère avec l'alésage (63) du corps de maître-cylindre (50) débouchant sur la paroi intérieure du récipient (51) de fluide hydraulique de réserve, et **en ce que** au moins une rainure de réalimentation (64) est prévue dans la paroi dudit alésage depuis le débouché dans ladite paroi du récipient et s'étend axialement dans ladite paroi de l'alésage (63) jusqu'au delà de 1a position de recul inactive de la lèvre (55) de la garniture annulaire d'étanchéité, de manière à permettre la réalimentation directe de l'alésage (63) du maître-cylindre par 1e liquide hydraulique du récipient de réserve (51) via ladite rainure (64) lorsque le piston du maître-cylindre est en position de recul.

10. Dispositif de montage selon l'une quelconque des revendications 7 à 9, **caractérisé en ce que** le piston du maître-cylindre est constitué par un poussoir (84) qui porte à une extrémité une garniture d'étanchéité (55) suivie d'une surface d'appui rotulante (85, 85a) toujours engagée dans l'entrée de l'alésage (63), même en position de recul maximale dudit piston (72), et **en ce que** ledit poussoir (84) est relié, à l'autre extrémité de façon pivotante (96) à un organe d'actionnement (69) imposant audit poussoir en déplacement axial un pivotement sur un petit angle (arc 98) au cours dudit déplacement axial.

11. Dispositif de montage selon l'une quelconque des revendications 7 à 10, **caractérisé en ce que** le corps (50) du maître-cylindre et une partie (77) du récipient de réserve sont fixés sur la plaque-support (1b), dans la zone où est constitué le reste (74) du récipient de réserve, avec interposition d'un joint d'étanchéité (78).

12. Dispositif de montage selon l'une quelconque des revendications 1 à 11, **caractérisé en ce que** la plaque-support (1a) présente en outre au moins un organe de commande électrique et/ou électronique (25) et une pédale associée (10c).

13. Dispositif de montage selon la revendication 12, **caractérisé en ce que** ledit organe de commande électrique ou électronique est monté dans un boîtier (26) solidaire d'une face latérale (27) de la plaque-support (1a), du côté de la première face principale de la plaque-support tournée en service vers l'habitacle du véhicule.

14. Dispositif de montage selon l'une quelconque des revendications 12 ou 13, **caractérisé en ce que** l'organe de commande électrique et/ou électronique (25) commande l'accélérateur du moteur du véhicule.

15. Dispositif de montage selon l'une quelconque des revendications 1 à 14, **caractérisé en ce que** 1a plaque-support (1a) présente, du côté de la première face principale tournée en service vers l'habitacle, un boîtier de connexions (20) dans lequel sont établies des liaisons électriques (21a, 21b, 21c) entre au moins un capteur coopérant avec l'un desdits organes de commande (13, 14, 25) et au moins un connecteur (23a, 23b, 23c) traversant la plaque-support (1).

16. Dispositif de montage selon la revendication 15, **caractérisé en ce que** ledit boîtier de connexions (20) est réalisé monobloc avec la plaque-support.

17. Dispositif de montage selon la revendication 15 ou 16, **caractérisé en ce que** ledit connecteur (23a, 23b, 23c) débouche, du côté de la deuxième face principale de la plaque-support (1a), par une borne de branchement (24a, 24b, 24c).

18. Dispositif de montage selon l'une quelconque des revendications 15 à 17, **caractérisé en ce que** ledit connecteur (23a, 23b, 23c) traverse la plaque-support (1a) de façon sensiblement étanche.

19. Dispositif de montage selon l'une quelconque des revendications 15 à 18, **caractérisé en ce que** ledit boîtier de connexions (20) est fermé, du côté de la première face principale de la plaque-support (1), par un couvercle amovible (28).

20. Dispositif de montage selon l'une quelconque des revendications 1 à 19, **caractérisé en ce que** la plaque-support (1b) présente des passages passe-cloison (29) permettant 1e passage de liaisons de fluides et/ou de liaisons électriques d'une face principale à l'autre face principale de la plaque-support (1b).

21. Dispositif de montage selon l'une quelconque des revendications 1 à 20, **caractérisé en ce que** la plaque-support (1a, 1b) présente, du côté de la deuxième face principale, une cavité (35, 38) dans laquelle est logé au moins partiellement l'organe de commande à fluide sous pression (13, 14, 16).

22. Dispositif de montage selon la revendication 21, **caractérisé en ce qu'**au moins une face de ladite cavité (35, 38) est munie de nervures de renforcement et/ou de raidissement (36).

23. Dispositif de montage selon l'une quelconque des revendications 1 à 22, **caractérisé en ce que** la plaque-support (1a) présente au moins une face (5) apte à être disposée jointive avec une face conjuguée de la plaque-support (1b) d'un autre dispositif de montage.

24. Dispositif de montage selon la revendication 23, **caractérisé en ce que** 1a plaque-support (1a, 1b) présente la forme générale d'un rectangle comportant sur trois de ses côtés un rebord (2a, 2b) destiné à s'appliquer sur le bord d'une ouverture (3) réalisée dans une paroi du véhicule, ladite face (5) apte à être disposée jointive avec une face conjuguée constituant le quatrième côté du rectangle.

25. Dispositif de montage selon la revendication 23, **caractérisé en ce que** la plaque-support présente la forme générale d'un rectangle comportant sur deux côtés opposés un rebord (2a) destiné à s'appliquer sur le bord d'une ouverture (3) réalisée dans une paroi du véhicule, les deux autres côtés constituant chacun une face (5) apte à être disposée jointive avec une face conjuguée de la plaque-support d'un autre dispositif de montage.

26. Dispositif de montage selon l'une quelconque des revendications 23 à 25, **caractérisé en ce que** au moins une face (5) de la plaque-support (1a) présente un joint (4) apte à assurer l'étanchéité entre ladite plaque-support (1a) et une plaque-support (1b) montée jointive d'un autre dispositif de montage.

27. Maître cylindre générateur de pression hydraulique, **caractérisé en ce que** le corps principal ou d'assemblage du maître cylindre est réalisé monobloc avec une plaque-support (1b) en forme de plaque à deux faces principales dans laquelle est intégrée la pédale d'actionnement (10b, 69), pour constituer un dispositif de montage selon l'une quelconque des revendications 7 à 11.

28. Véhicule à moteur comprenant au moins un dispositif de montage selon l'une quelconque des revendications 1 à 26 ou un maître cylindre selon la revendication 27.

29. Véhicule à moteur selon la revendication 28, **caractérisé en ce qu'**il comprend deux dispositifs de montage, le premier présentant un organe de commande de débrayage (14) et le deuxième présentant une valve de commande à fluide sous pression (13).

30. Véhicule à moteur selon la revendication 29, **caractérisé en ce que** ledit deuxième dispositif de montage présente en outre un organe de commande (25) d'accélérateur du moteur.

31. Véhicule à moteur selon l'une quelconque des revendications 28 à 30, **caractérisé en ce que** deux dispositifs de montage sont disposés avec leurs plaques-supports respectives (1a, 1b) jointives partiellement dans une ouverture (3) réalisée dans la paroi de la cabine de conduite dudit véhicule.

## Claims

1. A device for mounting at least one (10a, 10b, 32, 69) operated pressurised fluid control member (13,14), for a motor vehicle, comprising a support (1) in the general form of a plate, with two main faces on which said pressurised fluid control member having at least one cast main body is arranged so as to pass through said support plate from one main face thereof to the other main face, the said associated lever or pedal being mounted at a first main face of said support plate, **characterised in that** the support plate (1a, 1b) is of a rigid and one-piece construction obtained by casting and **in that** the main or assembly body (13a, 13b, 16, 50, 51, 74) of said pressurised fluid control member (13, 14, 16, 52, 73) is of a one-piece construction with said support plate (1a, 1b).

2. The mounting device according to claim 1, **characterised in that** at least one (15, 17, 50, 51, 74) of the fluid confining walls of said pressurised fluid member (13, 14, 52, 73) is of a one-piece construction with said support plate (1).

3. The mounting device according to any one of claims 1 or 2, **characterised in that** said associated lever or pedal (10a, 10b, 10c, 69) is pivotally mounted on an axis (9, 70) carried by a bearing (8, 76) integral with said support plate (1).

4. The mounting device according to any one of claims 1-3, **characterised in that** said associated lever or pedal (32) has a forked portion the hooked ends (11a, 11b) of which engage in mating hook openings (8b, 8b) formed in a bearing (8) integral with said support plate.

5. The mounting device according to any one of claims 1-4, **characterised in that** said pressurised fluid control member is a dual braking cock (13b) the fluid connectors (40) of which are arranged substantially parallel to the axis of symmetry of said dual braking cock.

6. Mounting device according to one of Claims 1-4, **characterised in that** said pressurised fluid control member is a tandem brake cock the main body (13a) of which is of a one-piece construction with said support plate and has a face (43) for receiving a second body (44) that is added on.

7. The mounting device according to any one of Claims 1-6, in which, in a manner known per se, said pressurised fluid control member is a hydraulic fluid master cylinder (52) **characterised in that** at least a part of said body (50) and/or of the reserve recipient (51, 74) for hydraulic fluid is of a one-piece construction with said support plate (1b).

8. The mounting device according to claim 7, **characterised in that** said reserve recipient (51, 74) is closed by elastic bellows (59, 89) connected, at one end thereof, to an annular flange (58) on the reserve recipient (51) and, at the other end thereof, to a movable pushrod or plunger (53, 84) of said master cylinder, passing through said reserve recipient.

9. The mounting device according to claim 7 or 8, **characterised in that** the piston (54) of said master cylinder includes a pushrod (53) which passes through said reserve recipient (51) and carries an annular lipped seal fitting (55) which co-operates with the bore {63) of the body of said master cylinder (50) opening out at the inner wall of the reserve hydraulic fluid recipient (51), and **in that** at least one groove (64) for re-supply is provided in the wall of said bore from its outlet to the said recipient wall, and extending axially in said wall of the bore (63) to a point beyond the position of inactive backward displacement of the lip (55) of said annular seal fitting, so as to allow direct re-supply of the bore (63) of the master cylinder by hydraulic fluid from said reserve recipient (51) via said groove (64) when said master cylinder piston is in a position where it has moved backwards.

10. The mounting device according to any one of claims 7-9, **characterised in that** said master cylinder piston is constituted by a pushrod (84) carrying at one end thereof a sealing fitting (55) followed by a ball joint bearing surface (85, 85a) always engaged in the entrance to said bore (63), even in a position of maximum backward displacement of said piston (72), and **in that** said pushrod (84) is connected, at the other end, pivotally (96) to an actuator (69) obliging said pushrod, when moving axially, to pivot about a small angle (arc 98) during said axial movement.

11. The mounting device according to any one of claims 7-10, **characterised in that** the body (50) of the master cylinder and a part (77) of said reserve recipient are fixed to said support plate (1b), in a region where the remainder (74) of said reserve recipient is constituted, with a sealing gasket (78) therebetween.

12. The mounting device according to any one of Claims 1-11, **characterised in that** said support plate (1a) further has at least one electric and/or electronic control member (25) and an associated pedal (10c).

13. The mounting device according to claim 12, **characterised in that** said electric or electronic control member is mounted in a housing (26) integral with a side face (27) of said support plate (1a), at the side of that first main face of the support plate which, in use, is directed towards the vehicle driver compartment.

14. The mounting device according to any one of claims 12 or 13, **characterised in that** the electric and/or electronic control member (25) controls the accelerator of said motor vehicle.

15. The mounting device according to any one of Claims 1-14, **characterised in that** said support plate (1a) has, at the side of its first main face directed, in use, towards the driver compartment, a connecting box (20) inside which electrical connections (21a, 21b, 21c) are set up between at least one sensor co-operating with one of said control members (13, 14, 25) and at least one connector (23a, 23b, 23c) passing through said support plate (1).

16. The mounting device according to claim 15, **characterised in that** said connecting box (20) is of a one-piece construction with said support plate.

17. The mounting device according to claim 15 or 16, **characterised in that** said connector (23a, 23b, 23c) ends, at the side of the second main face of said support plate (1a) with a connection terminal (24a, 24b, 24c).

18. The mounting device according to any one of claims 15-17, **characterised in that** said connector (23a, 23b, 23c) passes through said support plate (1a) in a substantially sealed manner.

19. The mounting device according to any one of claims 15 to 18, **characterised in that** said connection box (20) is closed, at the side of the first main face of said support plate (1), by a removable cover (28).

20. The mounting device according to any one of claims 1-19, **characterised in that** said support plate (1b) has pass-through passages (29) allowing fluid and/or electrical connections to pass from one main face to the other main face of said support plate (1b).

21. The mounting device according to any one of claims 1-20, **characterised in that** the support plate (1a) has, at the side of its second main face, a cavity (35, 38) in which there is housed, at least partially, said pressurised fluid control member (13, 14, 16).

22. The mounting device according to claim 21, **characterised in that** at least one face of said cavity (35, 38) is provided with reinforcing and/or rigidifying ribs (36).

23. The mounting device according to any one of claims 1-22, **characterised in that** said support plate (1a) has at least one face (5) adapted to be arranged in contact with a mating face of the support plate (1b) of another mounting device.

24. The mounting device according to claim 23, **characterised in that** the support plate (1a, 1b) has a general shape of a rectangle carrying, on three of its sides, a flange (2a, 2b) arranged to be applied against the edge of an opening (3) provided in a vehicle wall, said face (5) being adapted to be arranged in contact with a mating face constituting the fourth side of the rectangle.

25. The mounting device according to claim 23, **characterised in that** the support plate has a generally rectangular shape carrying, on two opposing sides thereof, a flange (2a) arranged to be applied to the edge of an opening (3) provided in a vehicle wall, the two other sides each constituting a face (5) adapted to be arranged in contact with a mating face of the support plate of another mounting device.

26. The mounting device according to any one of claims 23-25, **characterised in that** at least one face (5) of said support plate (1a) has a seal (4) to provide sealing between said support plate (1a) and a support plate (1b) in contact therewith, of another mounting device.

27. A master cylinder for generating hydraulic pressure, **characterised in that** the main or assembly body of the master cylinder is of a one-piece construction with a support plate (1b) in the form of a plate having two main faces in which there is integrated the operating pedal (10b, 69), for constituting a mounting device according to any one of claims 7 to 11.

28. A motor vehicle comprising at least one mounting device according to any one of claims 1 to 26, or a master cylinder according to claim 27.

29. A motor vehicle according to claim 28, **characterised in that** it comprises two mounting devices, the first having a clutch control member (14) and the second having a pressurised fluid control valve (13).

30. The motor vehicle according to claim 29, **characterised in that** said second mounting device additionally has a control member (25) for an engine accelerator.

31. The motor vehicle according to any one of claims 28-30, **characterised in that** two mounting devices are arranged with their respective support plates (1a, 1b) partially in contact in an opening (3) provided in the wall of the driver compartment of said vehicle.

## Patentansprüche

1. Für ein Kraftfahrzeug geeignete Vorrichtung zur Befestigung wenigstens eines Steuerorgans (13, 14), das mit einem Druckfluid arbeitet und von einem Hebel oder Pedal (10a, 10b, 32, 69) betätigt wird, mit einem im wesentlichen plattenförmigen, zwei Hauptflächen aufweisenden Träger (1), auf dem das mit Druckfluid arbeitende, wenigstens einen gegossenen Hauptkörper aufweisende Steuerorgan in der Weise ausgebildet ist, dass es die Trägerplatte von einer Hauptfläche zur anderen Hauptfläche durchdringt, wobei der zugehörige Hebel bzw das zugehörige Pedal auf der Seite einer ersten Hauptfläche der Trägerplatte montiert ist, **dadurch gekennzeichnet, dass** die Trägerplatte (1a, 1b) starr und einstückig gegossen ist und dass der Haupt- oder Baukörper (13a, 13b, 16, 50, 51, 74) des mit Druckfluid arbeitenden Steuerorgans (13, 14, 16, 52, 73) einstückig mit der Trägerplatte (1a, 1b) ausgebildet ist.

2. Befestigungsvorrichtung nach Anspruch 1, **dadurch gekennzeichnet, dass** wenigstens eine (15, 17, 50, 51, 74) der Fluidbegrenzungswände des Druckfluidorgans (13, 14, 52, 73) einstückig mit der Trägerplatte (1) ausgebildet ist.

3. Befestigungsvorrichtung nach einem der Ansprüche 1 oder 2, **dadurch gekennzeichnet, dass** der zugehörige Hebel bzw das zugehörige Pedal (10a, 10b, 10c, 69) schwenkbar an einer Achse (9, 70) befestigt ist, die von einem einstückig mit der Trägerplatte (1) ausgebildeten Lager (8, 76) getragen wird.

4. Befestigungsvorrichtung nach einem der Ansprüche 1 bis 3, **dadurch gekennzeichnet, dass** der zugehörige Hebel bzw das zugehörige Pedal (32) eine Gabel aufweist, deren hakenförmige Enden (11a, 11b) in komplementär gekrümmte Ausnehmungen (8a, 8b) eingreifen, die in einem mit der Trägerplatte einstückigen Lager (8) ausgebildet sind.

5. Befestigungsvorrichtung nach einem der Ansprüche 1 bis 4, **dadurch gekennzeichnet, dass** das mit einem Druckfluid arbeitende Steuerorgan ein doppeltes Bremsventil (13b) ist, dessen Fluidanschlüsse (40) im wesentlichen parallel zur Symmetrieachse des doppelten Bremsventils angeordnet sind.

6. Befestigungsvorrichtung nach einem der Ansprüche 1 bis 4, **dadurch gekennzeichnet, dass** das mit Druckfluid arbeitende Steuerorgan ein Tandembremsventil ist, dessen Hauptkörper (13a) einstückig mit der Trägerplatte ausgebildet ist und eine Fläche (43) zum Anfügen eines angesetzten zweiten Körpers (44) aufweist.

7. Befestigungsvorrichtung nach einem der Ansprüche 1 bis 6, bei der in an sich bekannter Weise das mit Druckfluid arbeitende Steuerorgan ein mit Hydraulikfluid arbeitender Hauptzylinder (52) ist, **dadurch gekennzeichnet, dass** wenigstens ein Teil des Körpers (50) und/oder des Reservebehälters (51, 74) des Hydraulikfluids einstückig mit der Trägerplatte (1b) ausgebildet ist.

8. Befestigungsvorrichtung nach Anspruch 7, **dadurch gekennzeichnet, dass** der Reservebehälter (51, 74) durch einen elastischen Balg (59, 89) verschlossen ist, der an einem Ende mit einem ringförmigen Kragen (58) des Reservebehälters (51) und am anderen Ende mit einem den Reservebehälter durchdringenden beweglichen Stößel oder Stempel (53, 84) des Hauptzylinders verbunden ist.

9. Befestigungsvorrichtung nach Anspruch 7 oder 8, **dadurch gekennzeichnet, dass** der Kolben (54) des Hauptzylinders einen Stößel (53) aufweist, der den Reservebehälter (51) durchdringt und eine Dichtungseinrichtung mit Lippe (55) trägt, die mit der Bohrung (63) des Körpers des Hauptzylinders zusammenwirkt, welche an der Innenwand des Hydraulikfluid-Reservebehälters (51) mündet, und dass in der Wand der Bohrung, ausgehend von der Mündung an der Behälterwand, wenigstens eine Wiederversorgungsnut (64) vorhanden ist und sich in der Wand der Bohrung (63) axial bis über den Totpunkt der Lippe (55) der ringförmigen Dichtungseinrichtung hinaus erstreckt, so dass die unmittelbare Wiederversorgung der Bohrung (63) des Hauptzylinders durch die Hydraulikflüssigkeit des Reservebehälters (51) über die Nut (64) ermöglicht wird, solange sich der Kolben des Hauptzylinders in Rückfahrstellung befindet.

10. Befestigungsvorrichtung nach einem der Ansprüche 7 bis 9, **dadurch gekennzeichnet, dass** der Kolben des Hauptzylinders aus einem Stößel (84) besteht, der an einem Ende eine Dichtungseinrichtung (55) mit einer kugeligen Anlagefläche (85, 85a) trägt, die ständig, sogar in der maximal zurückgefahrenen Stellung des Kolbens (72), am Eingang der Bohrung (63) anliegt, und dass der Stößel (84) am anderen Ende schwenkbar (96) mit einem Betätigungsorgan (69) verbunden ist, das dem Stößel bei axialer Verschiebung eine Schwenkung kleinen Winkels (Bogenlinie 98) im Lauf der axialen Verschiebung auferlegt.

11. Befestigungsvorrichtung nach einem der Ansprüche 7 bis 10, **dadurch gekennzeichnet, dass** der Körper (50) des Hauptzylinders und ein Teil (77) des Reservebehälters an der Trägerplatte (1b) befestigt sind, wobei in dem Bereich, in dem der Rest (74) des Reservebehälters ausgebildet ist, eine Dichtung (78) zwischengelegt ist.

12. Befestigungsvorrichtung nach einem der Ansprüche 1 bis 11, **dadurch gekennzeichnet, dass** die Trägerplatte (1a) ferner wenigstens ein elektrisches und/oder elektronisches Steuerorgan (25) und ein zugehöriges Pedal (10c) aufweist.

13. Befestigungsvorrichtung nach Anspruch 12, **dadurch gekennzeichnet, dass** das elektrische oder elektronische Steuerorgan in einem Gehäuse (26) eingebaut ist, das einstückig mit einer Seitenfläche (27) der Trägerplatte (1a) ausgebildet ist, und zwar auf der Seite der im Betrieb zur Fahrgastzelle des Fahrzeugs gewandten ersten Hauptfläche der Trägerplatte.

14. Befestigungsvorrichtung nach einem der Ansprüche 12 oder 13, **dadurch gekennzeichnet, dass** das elektrische und/oder elektronische Steuerorgan (25) die Beschleunigungseinrichtung des Fahrzeugmotors steuert.

15. Befestigungsvorrichtung nach einem der Ansprüche 1 bis 14, **dadurch gekennzeichnet, dass** die Trägerplatte (1a) auf der Seite der im Betrieb zur Fahrgastzelle gewandten ersten Hauptfläche der Trägerplatte ein Anschlussgehäuse (20) aufweist, in dem elektrische Verbindungen (21a, 21b, 21c) zwischen wenigstens einem Sensor, der mit einem der Steuerorgane (13, 14, 25) zusammenarbeitet, und wenigstens einem durch die Trägerplatte (1) tretenden Kontakt (23a, 23b, 23c) hergestellt sind.

16. Befestigungsvorrichtung nach Anspruch 15, **dadurch gekennzeichnet, dass** das Anschlussgehäuse (20) einstückig mit der Trägerplatte ausgebildet sind.

17. Befestigungsvorrichtung nach Anspruch 15 oder 16, **dadurch gekennzeichnet, dass** der Kontakt (23a, 23b, 23c) auf der Seite der zweiten Hauptfläche der Trägerplatte (1a) in einer Anschlussklemme (24a, 24b, 24c) mündet.

18. Befestigungsvorrichtung nach einem der Ansprüche 15 bis 17, **dadurch gekennzeichnet, dass** der Kontakt (23a, 23b, 23c) im wesentlichen dicht durch die Trägerplatte (1a) tritt.

19. Befestigungsvorrichtung nach einem der Ansprüche 15 bis 18, **dadurch gekennzeichnet, dass** das Anschlussgehäuse (20) auf der Seite der ersten Hauptfläche der Trägerplatte (1) durch einen abnehmbaren Deckel (28) verschlossen ist.

20. Befestigungsvorrichtung nach einem der Ansprüche 1 bis 19, **dadurch gekennzeichnet, dass** die Trägerplatte (1b) Wanddurchführungen (29) aufweist, die das Hindurchtreten von Fluidverbindungen und/oder elektrischen Verbindungen von einer Hauptfläche zur anderen Hauptfläche der Trägerplatte (1b) ermöglichen.

21. Befestigungsvorrichtung nach einem der Ansprüche 1 bis 20, **dadurch gekennzeichnet, dass** die Trägerplatte (1a, 1b) auf der Seite der zweiten Hauptfläche eine Ausnehmung (35, 38) aufweist, in der das mit Druckfluid arbeitende Steuerorgan (13, 14, 16) wenigstens teilweise untergebracht ist.

22. Befestigungsvorrichtung nach Anspruch 21, **dadurch gekennzeichnet, dass** wenigstens eine Fläche der Ausnehmung (35, 38) mit Verstärkungs- und/oder Versteifungsrippen (36) versehen ist.

23. Befestigungsvorrichtung nach einem der Ansprüche 1 bis 22, **dadurch gekennzeichnet, dass** die Trägerplatte (1a) wenigstens eine Fläche (5) aufweist, die dazu geeignet ist, an eine komplementäre Fläche der Trägerplatte (1b) einer weiteren Befestigungsvorrichtung angefügt zu werden.

24. Befestigungsvorrichtung nach Anspruch 23, **dadurch gekennzeichnet, dass** die Trägerplatte (1a, 1b) im wesentlichen die Form eines Rechtecks hat, das an drei seiner Seiten einen Flansch (2a, 2b) aufweist, der zur Auflage am Rand einer in einer Fahrzeugwand ausgebildeten Öffnung (3) bestimmt ist, wobei die Fläche (5) dazu geeignet ist, an eine komplementäre Fläche angefügt zu werden, welche die vierte Seite des Rechtecks bildet.

25. Befestigungsvorrichtung nach Anspruch 23, **dadurch gekennzeichnet, dass** die Trägerplatte im wesentlichen die Form eines Rechtecks hat, das an zwei gegenüberliegenden Seiten einen Flansch (2a) aufweist, der zur Auflage am Rand einer in einer Fahrzeugwand ausgebildeten Öffnung (3) bestimmt ist, wobei die beiden anderen Seiten jeweils eine Fläche (5) bilden, die dazu geeignet ist, an eine komplementäre Fläche der Trägerplatte einer weiteren Befestigungsvorrichtung angefügt zu werden.

26. Befestigungsvorrichtung nach einem der Ansprüche 23 bis 25, **dadurch gekennzeichnet, dass** wenigstens eine Fläche (5) der Trägerplatte (1a) eine Dichtung aufweist, die dazu geeignet ist, die Dichtheit zwischen der Trägerplatte (1a) und einer angefügten Trägerplatte (1b) einer weiteren Befestigungsvorrichtung sicherzustellen.

27. Hauptzylinder zur Erzeugung von Hydraulikdruck, **dadurch gekennzeichnet, dass** der Haupt- oder Baukörper des Hauptzylinders einstückig mit einer Trägerplatte (1b) ausgebildet ist, die als Platte mit zwei Hauptflächen gebildet ist, in die das Betätigungspedal (10b, 69) integriert ist, um eine Befestigungsvorrichtung nach einem der Ansprüche 7 bis 11 zu bilden.

28. Kraftfahrzeug mit wenigstens einer Befestigungsvorrichtung nach einem der Ansprüche 1 bis 26 oder mit einem Hauptzylinder nach Anspruch 27.

29. Kraftfahrzeug nach Anspruch 28, **dadurch gekennzeichnet, dass** es zwei Befestigungsvorrichtungen aufweist, wobei die erste Befestigungsvorrichtung ein Auskuppelsteuerorgan (14) darstellt und die zweite Befestigungsvorrichtung ein mit Druckfluid arbeitendes Steuerventil (13) darstellt.

30. Kraftfahrzeug nach Anspruch 29, **dadurch gekennzeichnet, dass** die zweite Befestigungsvorrichtung ferner ein Motorbeschleunigungssteuerorgan (25) darstellt.

31. Kraftfahrzeug nach einem der Ansprüche 28 bis 30, **dadurch gekennzeichnet, dass** zwei Befestigungsvorrichtungen mit ihren aneinandergefügten jeweiligen Trägerplatten (1a, 1b) teilweise in einer Öffnung (3) angeordnet sind, die in der Wand des Führerhauses des Fahrzeugs ausgebildet ist.
